(19) Europäisches Patentamt
European Patent Office
Office européen des brevets

(11) **EP 1 335 257 B1**

(12) **FASCICULE DE BREVET EUROPEEN**

(45) Date de publication et mention
de la délivrance du brevet:
**30.06.2010 Bulletin 2010/26**

(51) Int Cl.:
***G05B 19/19*** *(2006.01)*     ***G05D 1/08*** *(2006.01)*

(21) Numéro de dépôt: **03290142.3**

(22) Date de dépôt: **21.01.2003**

(54) **Dispositif de commande à boucle d'asservissement, notamment actionneur électro-hydraulique de commande de vol**

Vorrichtung zur Servosteuerung, insbesondere ein elektro-hydraulischer Aktuator für Flugsteuerung

Servo control device, in particular an electro-hydraulic actuator for flight control

(84) Etats contractants désignés:
**DE ES FR GB IT**

(30) Priorité: **21.01.2002 FR 0200679**

(43) Date de publication de la demande:
**13.08.2003 Bulletin 2003/33**

(73) Titulaire: **Goodrich Actuation Systems SAS**
**78530 Buc (FR)**

(72) Inventeur: **Silvestro, Geneviève**
**95610 Eragny (FR)**

(74) Mandataire: **Texier, Christian et al**
**Cabinet Régimbeau**
**20, rue de Chazelles**
**75847 Paris Cedex 17 (FR)**

(56) Documents cités:
**EP-A- 0 289 151     EP-A- 0 469 151**
**US-A- 5 063 335     US-A- 5 224 667**
**US-A- 5 369 345     US-A- 5 880 953**

- **PATENT ABSTRACTS OF JAPAN vol. 1999, no. 08, 30 juin 1999 (1999-06-30) & JP 11 073205 A (HONDA MOTOR CO LTD), 16 mars 1999 (1999-03-16)**
- **PATENT ABSTRACTS OF JAPAN vol. 014, no. 358 (P-1087), 2 août 1990 (1990-08-02) & JP 02 130608 A (NKK CORP), 18 mai 1990 (1990-05-18)**
- **PATENT ABSTRACTS OF JAPAN vol. 009, no. 120 (P-358), 24 mai 1985 (1985-05-24) & JP 60 005306 A (FANUC KK), 11 janvier 1985 (1985-01-11)**
- **IWASAKI R.; SAKAI K.; MATSUI N.: 'High-speed and high-precision table positioning system by using mode switching control' INDUSTRIAL ELECTRONICS SOCIETY, 1998. IECON '98. PROCEEDINGS OF THE 24TH ANNUAL CONFERENCE OF THE IEEE AACHEN, GERMANY 31 AUG.-4 SEPT. 1998, NEW YORK, NY, USA,IEEE, US vol. 3, 31 Août 1998, NEW YORK, NY, USA, IEEE, US, pages 1727 - 1732, XP010308264**

**Description**

*DOMAINE GENERAL DE L'INVENTION ET ETAT DE LA TECHNIQUE*

La présente invention est relative à des perfectionnements aux dispositifs d'asservissement.

Elle trouve en particulier avantageusement application pour des systèmes d'actionneurs électro-hydrauliques et en particulier pour des systèmes d'actionneurs de ce type utilisés en asservissement en position ou en asservissement d'effort pour les commandes de vol.

Classiquement, un dispositif de servocommande de position pour actionneur de commande de vol comporte une boucle d'asservissement qui intègre des moyens de compensation disposés dans la boucle, en amont du système servocommandé, ces moyens de compensation assurant un filtrage notamment aux fréquences de résonance des mouvements de la ou des pièce(s) mécanique(s) actionnée(s) par le système.

Les documents US-A-5 369 345 ainsi que XP-010 308 264 décrivent de tels dispositifs connus.

Les performances demandées par les constructeurs aéronautiques aux actionneurs de commandes de vol sont de plus en plus sélectives.

Elles s'avèrent désormais difficiles à atteindre avec de simples boucles d'asservissement classiques.

*PRESENTATION DE L'INVENTION*

L'invention propose quant à elle un dispositif d'asservissement particulièrement stable, qui présente une bonne robustesse aux variations des paramètres mécaniques, comme la raideur globale ou les paramètres d'inertie.

Le dispositif proposé par l'invention présente en outre l'avantage de ne pas nécessiter de capteurs supplémentaires et de pouvoir en cas de défaillance fonctionner comme un système classique stable.

Plus particulièrement, l'invention propose un dispositif de commande comportant une boucle d'asservissement principale qui comprend un dispositif servocommandé, ainsi que des moyens de compensation en amont de celui-ci, ledit dispositif comportant une boucle secondaire qui reçoit en entrée un signal dérivé de la boucle d'asservissement et qui génère en fonction d'une part de ce signal et d'autre part d'un signal caractéristique d'un paramètre du dispositif servocommandé, une erreur caractéristique de la différence entre ledit signal caractéristique d'un paramètre du dispositif servocommandé et un signal théorique déterminé au moyen d'une modélisation, ce signal d'erreur étant injecté dans la boucle principale pour corriger la commande du dispositif servocommandé, caractérisé en ce que la boucle secondaire et/ou la boucle principale comporte(nt) au moins un amplificateur à gain variable, ledit dispositif comportant des moyens pour commander le gain dudit amplificateur en fonction d'une part dudit signal caractéristique d'un état du dispositif servocommandé et d'autre part d'un signal dérivé de la boucle principale en amont dudit dispositif.

Un tel dispositif est avantageusement complété par les différentes caractéristiques suivantes prises seules ou selon toutes leurs combinaisons techniquement possibles :

- l'erreur générée par la boucle secondaire est une erreur caractéristique de la différence entre la sortie du dispositif servocommandé et une sortie théoriquement attendue déterminée au moyen d'une modélisation ;
- il comporte en sortie de la boucle secondaire des moyens aptes à réaliser un filtrage non linéaire de ladite erreur ;
- il comporte des moyens d'amplification en sortie des moyens de comparaison de la boucle secondaire, le gain de ces moyens d'amplification correspondant au gain de l'amplificateur de la boucle principale ;
- le gain de la boucle principale est fixe, la boucle secondaire comportant un amplificateur à gain variable ;
- le gain de l'amplificateur de la boucle principale est fixe, la boucle secondaire comportant un amplificateur à gain variable ;
- les moyens pour commander le gain d'un amplificateur à gain variable comportent des moyens pour appliquer à un signal dérivé de la boucle principale une modélisation simplifiée du modèle de la boucle secondaire ;
- la boucle secondaire attaque la boucle principale en entrée du dispositif servocommande ;
- la boucle secondaire attaque la boucle principale en amont des moyens de compensation.
- la modélisation de la boucle secondaire met en oeuvre une avance de phase.

L'invention a également pour objet une commande de vol électro-hydraulique pour aéronef, caractérisé en ce qu'elle comporte un dispositif du type précité.

*DESCRIPTION D'UN OU PLUSIEURS EXEMPLES DE REALISATION DE L'INVENTION*

La description qui suit est purement illustrative et non limitative et doit être lue en regard de la figure unique annexée qui présente le schéma de base d'un dispositif conforme à un mode de réalisation possible de l'invention.

## Structure générale

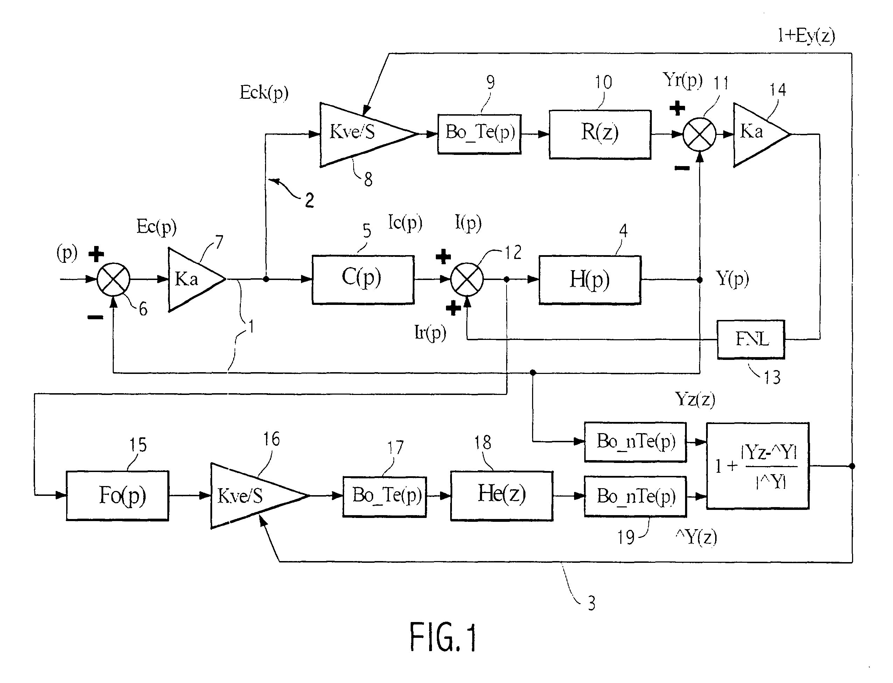

Le dispositif représenté sur la figure 1 comporte une boucle principale 1, une boucle à modèle interne 2, ainsi qu'un estimateur de paramètre 3.

La boucle 1 comporte un système servocommandé 4 ( fonction de transfert H(p)), ainsi que des moyens de compensation 5 (fiitre C(p)) qui, dans la boucle, sont disposés en amont de ce système servocommandé 4.

La boucle 1 comporte en outre des moyens de soustraction 6 qui en entrée de la boucle reçoivent d'une part un signal de commande E(p) et d'autre part un signal Y(p) qui est le signal en sortie de la boucle 1.

Le signal en sortie de ces moyens de soustraction 6 est un signal d'erreur Ec(p) correspondant à la différence entre le signal de commande E(p) et le signal Y(p) en sortie de la boucle 1.

La boucle comporte en outre un amplificateur 7 (gain Ka) interposé entre les moyens de compensation 5 et les moyens de soustraction 6.

## La boucle principale 1

Le système servocommandé 4 est par exemple composé :

- d'une servovalve recevant en entrée le courant (isv) et fournissant en sortie un débit (q) et
- d'une servocomande dont la grandeur d'entrée est le débit q et dont la grandeur de sortie est la position y de la pièce mécanique commandée.

La fonction de transfert de la servovalve est par exemple du type :

$$\frac{q}{isv} = \frac{kv}{\dfrac{1}{\omega_{0sv}^2}p^2 + 2\dfrac{\varsigma_{sv}}{\omega_{0sv}}p + 1}$$

La fonction de transfert linéaire de la servocommande est quant à elle par exemple du type :

$$\frac{y}{q} = \frac{1}{S}\frac{1}{p}\frac{C_{vh}Mp^3 + \left(C_{vh}C_{vm} + MR_h\right)p^2 + \left(R_hC_{vm} + C_{vh}R_m\right)p + R_mR_h}{\left(C_{vh} + C_{vm}\right)Mp^3 + \left(M\left(R_m + R_h\right) + C_{vh}C_{vm}\right)p^2 + \left(R_hC_{vm} + R_mC_{vh}\right)p + R_hR_m}$$

où M est la masse vue pat la servocommande et Rm la raideur mécanique globale.

Les paramètres $\zeta_{sv}$ et $\omega_{0sv}$ sont quant à eux par exemple des paramètres d'amortissements et de fréquences naturels.

De façon générale, on pourra, pour l'ensemble de ce texte, se reporter au tableau qui à la fin de la description donne la désignation de différents paramètres et des exemples de valeurs correspondantes

Les moyens de compensation 5 sont quant à eux par exemple constitués d'un filtre à trous destiné à compenser les résonances mécaniques.

Ce filtre peut être ou non numérisé.

A titre d'exemple, il peut correspondre à la fonction de transfert

$$C(p) = \frac{s^2 + 16.19s + 6617}{s^2 + 161.9s + 6617}$$

Le gain Ka de l'amplificateur 7 est déterminé de façon à assurer une grande stabilité au système. Dans l'exemple qui est illustré sur la figure 1, ce gain est fixe et les performances sont réglées par le modèle de référence 2 et l'estimateur 3.

En l'occurrence le gain Ka est par exemple égal à 400.

**La boucle à modèle interne**

La boucle à modèle interne 2 reçoit le signal en sortie de l'amplificateur 7 et le transmet à un ensemble qui comporte un amplificateur 8, et un modèle de référence 10 (R(z)).

Le modèle de référence 10 reçoit les signaux transmis par un bloqueur 9 (Be-Te), fonctionnant avec une période d'échantillonnage Te (par exemple en l'occurrence de 10 ms).

La sortie (Yr(p)) du modèle de référence 10 est transmise à des moyens de soustraction 11 qui reçoivent d'une part cette sortie et d'autre part le signal Y(p) en sortie de la boucle 1.

Le signal d'erreur en sortie de ces moyens de soustraction 11 est injecté dans la boucle 1, où il est sommé au signal qui commande le dispositif servocommandé 4 (moyens de sommation 12).

Avant d'être injecté dans la boucle 1, le signal d'erreur comportementale peut être le cas échéant être filtré (filtre 13 qui est par exemple un filtre non linéaire) et amplifié (amplificateur 14, de gain Ka).

La sommation réalisée sur l'entrée de la servocommande permet d'ajuster la commande du procédé en fonction d'une erreur avec le modèle théorique et de modifier cette commande jusqu'à ce que l'erreur entre le modèle et le procédé tende vers zéro, et ce tout en restant subordonnée à la boucle principale.

La fonction de transfert R(z) du modèle 10 inclut le modèle de référence et le filtre correcteur, est par exemple donnée par :

$$\frac{y_r}{Eck} = \frac{kve}{S}\frac{1}{s}\frac{\frac{1}{2\pi f_0}s + 1}{\frac{1}{(2\pi f_1)^2}s^2 + \frac{2\xi}{2\pi f_1}s + 1}$$

Ce modèle est un deuxième ordre propre avec un amortissement élevé $\xi$. La fréquence de coupure du dénominateur est f1. Le numérateur comporte une avance de phase à fréquence f0.

Cette avance de phase n'est pas obligatoire mais améliore la réponse du système en ralentissant la chute de la phase à haute fréquence.

**Estimateur de paramètres.**

Principe

Dans l'exemple illustré sur la figure 1, la différence calculée entre yr et y est amplifiée avec le même gain que celui de la boucle principale. En effet, l'erreur obtenue est au pire du même ordre de grandeur que celui de l'erreur de la boucle principale.

Dans la mesure où le modèle et surtout le gain de la boucle sont connus avec une grande précision, la correction par modèle interne est très efficace.

Cependant le gain de la boucle principale varie avec la charge (variation du gain kv de la servovalve) et l'on peut considérer que cette variation est nuisible aux performances.

L'utilisation d'un gain adapté permet de compenser les variations de charge et ainsi de ne pas sacrifier les performances du système à gain minimal pour privilégier la stabilité du système à gain maximal.

C'est le rôle de l'estimateur de paramètres décrit ci-après, qui constitue prioritairement un estimateur de gain.

Cet estimateur est par exemple construit à partir d'une numérisation simplifiée de la fonction de transfert (par exemple, deuxième ordre sur deuxième ordre, période d'échantillonnage 10ms). Il estime la sortie du procédé $\hat{y}$, puis calcule l'erreur relative entre la sortie du procédé et la sortie estimée afin d'en déduire une estimation du gain de boucle. L'algorithme d'estimation réajuste le gain de la boucle de référence en fonction de cette nouvelle estimation ($\alpha$k). On peut aussi minimiser un critère quadratique optimal.

Exemple de structure de l'estimateur de gain

L'estimateur de gain reçoit en entrée le signal corrigé en entrée de la servovalve (ic).

Ce signal est envoyé sur un filtre 15, qui est par exemple un filtre du premier ordre à 10Hz environ, amplifié au niveau d'un amplificateur 16 à gain commandable analogue à l'amplificateur 8 (gain Kve/s), puis numérisé par un bloqueur 17 de période Te (10ms).

En sortie de ce bloqueur 16, le signal est envoyé sur une fonction de transfert qui reprend de façon simplifiée la fonction de transfert R(z) du modèle.

Par exemple, dans le cas de la fonction de transfert donnée ci-dessus, la fonction de transfert simplifiée He (z) est de la forme :

$$F(p) = \frac{\hat{y}}{q} = \frac{kve}{S}\frac{1}{p}\frac{1 + \frac{C}{2B}s}{\frac{M}{Rmg}s^2 + \frac{C}{2B}s + 1}$$

Elle est discrétisée par l'algorithme de Tustin à 10ms.

Un signal $\hat{y}$ numérisé est obtenu en sous-échantillonnant la sortie de cette fonction avec une période nTe*Te plus grande que Te (bloqueur 19a).

Ce signal échantillonné en sortie du bloqueur 19a est envoyé, avec le signal en sortie de la boucle 1, également échantillonné avec la même fréquence d'échantillonnage (bloqueur 19b) sur un dispositif 20 qui calcule le gain Kve/s que doivent présenter les amplificateurs 8 et 16.

Ces amplificateurs 8 et 16 sont commandés par le signal en sortie de ce dispositif 20.

Convergence du gain

On note que :

$$\begin{cases} y = kv*ic \\ \hat{y} = \hat{k}v*ic \end{cases}$$

donc que l'erreur relative de position peut s'écrire :

$$\varepsilon_{ry} = \frac{y - \hat{y}}{\hat{y}}$$

mais aussi que :

$$1 + \varepsilon_{ry} = \frac{kv}{\hat{k}v}$$

Le rapport entre gain réel et gain estimé est majoré par 2 (rapport entre le gain minimum et le gain maximum). Donc on peut écrire :

$$\alpha_k = 1 + \left|\varepsilon_{ry}\right| < 2$$

Ce coefficient permet de remettre à jour le gain kve dans l'estimateur et la boucle du modèle de référence.

La multiplication de kve par αk va faire en sorte que αk converge vers une limite calculée ci-après.

$$\alpha_k = 1 + \left|\frac{y - \hat{y}}{\hat{y}}\right|$$

Puisque $k_{ve} < k_v$ alors

$$\alpha_k = 1 + \left| \frac{y - \hat{y}}{\hat{y}} \right| = 1 + \frac{k_v - k_{ve}\alpha_k}{k_{ve}\alpha_k} = \frac{k_v}{k_{ve}\alpha_k}$$

$$\alpha_k^2 = \frac{k_v}{k_{ve}}.$$

D'où

$$\alpha_k = \sqrt{\frac{k_v}{k_{ve}}}$$

La multiplication de kve par ce coefficient donne donc un gain approché qui est :

$$k_{va} = \alpha_k k_{ve}$$

$$k_{va} = k_{ve}\sqrt{\frac{k_v}{k_{ve}}} = \sqrt{k_v k_{ve}}$$

Dans la mesure où (12) est vérifiée et que

$$\begin{cases} k_{vp} \leq k_v \leq k_{vs} \\ k_{ve}init = k_{vp} \\ \dfrac{k_{vs}}{k_{ve}} < 2 \end{cases}$$

alors on a :

$$1 \leq \alpha_k \leq \sqrt{\frac{k_{vks}}{k_{vp}}} < \sqrt{2}$$

Et $\alpha$k peut aussi s'écrire :

$$\begin{cases} \alpha_k = 1 + \varepsilon \\ \varepsilon \le \sqrt{2} - 1 = 0.414 \end{cases}$$

$$\alpha_k^2 = \left(1 + \varepsilon\right)^2$$

D'après (12), (15) et (19) :

$$k_{va} \approx \sqrt{k_v \frac{k_v}{\left(1 + \varepsilon\right)^2}}$$

$$k_{va} \approx \frac{k_v}{1 + \varepsilon} < k_v$$

Cette dernière équation montre que l'algorithme converge vers une valeur qui reste toujours inférieure au gain de la boucle principale. Cette condition permet une stabilité globale plus grande car elle diminue les performances de la correction par adaptation et interdit l'inversion de procédé. Le gain estimé est en effet toujours volontairement inférieur au gain de la boucle principale. La boucle du modèle interne aura donc une action limitée, adoucie, et ne pourra jamais atteindre les caractéristiques de la boucle principale.

**Remarques générales**

On notera que la boucle 2 du modèle de référence est préférentiellement de type boucle ouverte et non pas de la boucle fermée. En effet, en venant corriger le gain du modèle de référence sans rien modifier de la boucle principale les pôles des boucles fermées (principale et modèle interne) vont se suivre en même temps que les gains de leur chaîne directe. Alors qu'un modèle en boucle fermée a une dynamique figée et peut ainsi s'éloigner beaucoup de la boucle principale. La simulation montre que la version contenant un modèle en boucle fermée est moins robuste aux perturbations.

Par ailleurs, on notera que le système a l'avantage d'être susceptible de fonctionner, même si la boucle 2 est déconnectée. Dans ce cas, la ré injection du signal d'erreur filtré est forcée à zéro. La boucle principale 1 continue à agir, suivant le modèle classique.

Par ailleurs, d'autres modes de réalisation de l'invention que celui qui a été spécifiquement décrit sont bien entendu envisageables.

Il est bien entendu possible d'attaquer la boucle 1 par la sortie de la boucle 2 de modèle en d'autres points qu'en entrée du système servocommandé ; en particulier, les moyens de sommation 15 peuvent être disposés en entrée de l'amplificateur 7 par exemple, ou entre l'amplificateur 7 et les moyens de compensation 5.

| Désignation des paramètres | Symbole | Valeur | Unité |
|---|---|---|---|
| Servovalve électro-hydraulique | | | |
| Courant de contrôle maximum | imax | 8 | mA |
| Amortissement | $\zeta_{sv}$ | 0.9 | --- |
| Fréquence naturelle | $\omega_{0sv}$ | 314 | Rad/s |
| Gain de stabilité | $k_{vs}$ | $1.34\ 10^{-4}$ | $m^3$/s/mA |
| Gain de performance | $k_{vp}$ | $0.70\ 10^{-4}$ | $m^3$/s/mA |
| Débit nominal | Qn | 64 | l/mm |
| Débit au point de performance | Qf | 33.4 | l/mm |

(suite)

| Charge mécanique | | | |
|---|---|---|---|
| Raideur d'attachement entre le corps et la structure fixe | Ra | $1.82\ 10^8$ | N/m |
| Raideur d'attachement entre la surface et la tige du piston | $R_t$ | $1.00\ 10^8$ | N/m |
| Raideur de charge globale | Rm | $6.45\ 10^7$ | N/m |
| Coefficient d'amortissement mécanique de charge | Cvm | $6.62\ 10^4$ | N/m/s |
| Masse de surface | M | 6803 | kg |
| Raideur globale | Rg | $4.5\ 10^7$ | N/m |
| Fréquence naturelle mécanique | $\omega_{0m}$ | 81.3 | Rad/s |
| Ratio d'amortissement mécanique | $\zeta$ | 5 | % |
| Vérin hydraulique | | | |
| Coefficient d'amortissement hydraulique | C | $5\ 10^5$ | Pa.s |
| Module global | B | $8\ 10^8$ | Pa |
| Surface de chambre | S | $6.119\ 10^{-3}$ | $m^2$ |
| Volume de la chambre en position centrale | V | $4.08\ 10^{-4}$ | $m^3$ |
| Raideur hydraulique | Rh | $1.49\ 10^8$ | N/m |
| Coefficient d'amortissement hydraulique | Cvh | $9.29\ 10^4$ | N/m/s |
| Course d'extension nominale | Yext | 0.066 | m |
| Course de rétractation nominale | Yret | 0.045 | m |
| Friction de soudure | Fsec | 5000 | N |
| Ordinateur | | | |
| Période d'échantillonnage | Te | $10^{-2}$ | s |
| Nombre de périodes d'échantillonnage | nTe | -- | -- |
| Gain de contrôle | Ka | 920 | mA/m |
| Gain du modèle initial de référence | Kve | $k_{vp}$ | mA/m |
| Position estimée | $\hat{y}$ | -- | m |

**Revendications**

1. Dispositif de commande comportant une boucle d'asservissement (1) principale qui comprend un système servocommandé (4), ainsi que des moyens de compensation (5) en amont de celui-ci et qui génère un signal caractéristique d'un paramètre du système servocommandé, ledit dispositif comportant une boucle secondaire (2) qui reçoit en entrée un signal dérivé de la boucle d'asservissement (1) **caractérisé en ce que** la boucle secondaire génère, en sortie, en fonction d'une part de ce signal et d'autre part dudit signal caractéristique d'un paramètre du système servocommandé (4), un signal d'erreur caractéristique de la différence entre ledit signal caractéristique d'un paramètre du système servocommandé (4) et un signal théorique déterminé au moyen d'une modélisation (10), ce signal d'erreur étant "injecté dans la boucle principale (1) pour corriger la commande du système servocommandé (4) et que la boucle secondaire (2) ou la boucle principale (1) comporte(nt) au moins un amplificateur à gain variable (8), ledit dispositif comportant des moyens pour commander le gain dudit amplificateur ces moyens comportant des moyens de modélisation et recevant en entrée d'une part ledit signal caractéristique d'un état du système servocommandé et d'autre part un signal dérivé de la boucle principale en amont dudit système.

2. Dispositif selon la revendication 1, **caractérisé en ce que** l'erreur générée par la boucle secondaire (2) est une erreur caractéristique de la différence entre la sortie du système servocommandé (4) et une sortie théoriquement attendue déterminée au moyen d'un modélisation (10).

3. Dispositif selon l'une des revendications précédentes, **caractérisé en ce qu'**il comporte en sortie de la boucle secondaire (2) des moyens (13) aptes à réaliser un filtrage non linéaire de ladite erreur.

4. Dispositif selon l'une des revendications précédentes, **caractérisé en ce qu'**il comporte des moyens d'amplification (14) en sortie des moyens de comparaison (11) de la boucle secondaire (2), le gain de ces moyens d'amplification (14) correspondant au gain de l'amplificateur (7) de la boucle principale (1).

5. Dispositif selon l'une des revendications précédentes, **caractérisé en ce que** le gain de la boucle principale (1) est fixe, la boucle secondaire comportant un amplificateur à gain variable (8).

6. Dispositif selon l'une des revendications 1 à 4, **caractérisé en ce que** le gain de l'amplificateur (7) de la boucle principale (1) est fixe, la boucle secondaire comportant un amplificateur à gain variable (8).

7. Dispositif selon l'une des revendications précédentes, **caractérisé en ce que** les moyens pour commander le gain d'un amplificateur à gain variable comportent des moyens pour appliquer à un signal dérivé de la boucle principale (1) une modélisation simplifiée du modèle (10) de la boucle secondaire.

8. Dispositif selon l'une des revendications précédentes, **caractérisé en ce que** la boucle secondaire (2) attaque la boucle principale (1) en entrée du système servocommandé (4).

9. Dispositif selon l'une des revendications précédentes, **caractérisé en ce que** la boucle secondaire (2) attaque la boucle principale (1) en amont des moyens de compensation (5).

10. Commande de vol électro-hydraulique pour aéronef comprenant un dispositif de commande comportant un boucle d'asservissement principale qui comprend au moins un actionneur électro-hydraulique de commande de vol, ainsi que des moyens de compensation en amont de celui-ci **caractérisé en ce que** le dispositif de commande est conforme à l'une des revendications précédentes.

**Claims**

1. Control device comprising a main servocontrol loop (1) that comprises a servocontrolled system (4), and compensation means (5) on the input side of this servocontrolled system (4) and which generates a signal characteristic of a parameter of the servocontrolled system, said system comprising a secondary loop (2) that receives a signal derived from the servocontrol loop (1) as input, **characterised in that** the secondary loop generates, in function of this signal and of said characteristic signal of a parameter of the servocontrolled system (4), an error signal characteristic of the difference between said characteristic signal of a parameter of the servocontrolled system (4) and a theoretical signal determined using a model (10), this error signal being injected into the main loop (1) to correct the control of the servocontrolled system (4), and **in that** the secondary loop (2) or main loop (1) comprise at least one variable gain amplifier (8), said device comprising means for controlling the gain of said amplifier, these means comprising modelling means and receiving as an input said characteristic signal of a state of the servocontrolled system and also a signal derived from the main loop on the input side of said system.

2. Device according to claim 1, **characterised in that** the error generated by the secondary loop (2) is an error characteristic of the difference between the output of the servocontrolled system (4) and a theoretically expected output determined using a model (10) .

3. Device according to any of the previous claims, **characterised in that** it comprises means (13) at the output from the secondary loop (2) able to perform nonlinear filtering of said error.

4. Device according to any of the previous claims, **characterised in that** it comprises amplification means (14) at the output from the secondary loop (2) comparison means (11), the gain of these amplification means (14) corresponding to the gain of the amplifier (7) in the main loop (1).

5. Device according to one of the previous claims, **characterised in that** the gain of the main loop (1) is fixed, the secondary loop comprising a variable gain amplifier (8).

6. Device according to any of claims 1 to 4, **characterised in that** the gain of the amplifier (7) in the main loop (1) is fixed, the secondary loop comprising a variable gain amplifier (8).

7. Device according to one of the previous claims, **characterised in that** the means for controlling the gain of a variable gain amplifier comprise means for applying a simplified model of the secondary loop model (10) to a signal derived from the main loop (1).

8. Device according to one of the previous claims, **characterised in that** the secondary loop (2) is input to the main loop (1) at the input of the servocontrolled system (4).

9. Device according to one of the previous claims, **characterised in that** the secondary loop (2) is input to the main loop (1) on the input side of the compensation means (5).

10. Electro-hydraulic flight controls for an aircraft, comprising a main servocontrol loop that comprises at least one electro-hydraulic flight control actuator, as well as compensation means on its input side, **characterised in that** the control device complies with one of the previous claims.

**Patentansprüche**

1. Steuervorrichtung, umfassend einen Hauptregelkreis (1), der ein servobetätigtes System (4) umfasst, sowie Ausgleichsmittel (5) oberhalb desselben und die ein Signal erzeugt, das für einen Parameter des servobetätigten Systems charakteristisch ist, wobei die Vorrichtung einen Nebenkreis (2) umfasst, der am Eingang ein Signal empfängt, das von dem Regelkreis (1) abgeleitet wird, **dadurch gekennzeichnet, dass** der Nebenkreis am Ausgang in Abhängigkeit einerseits von diesem Signal und andererseits von dem Signal, das für einen Parameter des servobetätigten Systems (4) charakteristisch ist, ein Fehlersignal erzeugt, das für den Unterschied zwischen dem Signal, das für einen Parameter des servobetätigten Systems (4) charakteristisch ist, und einem theoretischen Signal, das mittels einer Modellierung (10) bestimmt wird, charakteristisch ist, wobei dieses Fehlersignal in den Hauptkreis (1) eingekoppelt wird, um die Steuerung des servobetätigten Systems (4) zu korrigieren, und dass der Nebenkreis (2) oder der Hauptkreis (1) mindestens einen Verstärker mit variabler Verstärkung (8) umfasst, wobei die Vorrichtung Mittel umfasst, um die Verstärkung des Verstärkers zu steuern, wobei diese Mittel Modellierungsmittel umfassen, die am Eingang einerseits das Signal, das für einen Zustand des servobetätigten Systems charakteristisch ist, und andererseits ein Signal, das von dem Hauptkreis vor dem System abgeleitet wird, empfangen.

2. Vorrichtung nach Anspruch 1, **dadurch gekennzeichnet, dass** der Fehler, der durch den Nebenkreis (2) erzeugt wird, ein Fehler ist, der für den Unterschied zwischen dem Ausgang des servobetätigten Systems (4) und einem theoretisch erwarteten Ausgang, der mittels einer Modellierung (10) bestimmt wird, charakteristisch ist.

3. Vorrichtung nach einem der vorhergehenden Ansprüche, **dadurch gekennzeichnet, dass** sie am Ausgang des Nebenkreises (2) Mittel (13) umfasst, die dazu geeignet sind, eine nichtlineare Filterung des Fehlers auszuführen.

4. Vorrichtung nach einem der vorhergehenden Ansprüche, **dadurch gekennzeichnet, dass** sie Verstärkungsmittel (14) am Ausgang der Vergleichsmittel (11) des Nebenkreises (2) umfasst, wobei die Verstärkung dieser Verstärkungsmittel (14) der Verstärkung des Verstärkers (7) des Hauptkreises (1) entspricht.

5. Vorrichtung nach einem der vorhergehenden Ansprüche, **dadurch gekennzeichnet, dass** die Verstärkung des Hauptkreises (1) unverstellbar ist, wobei der Nebenkreis einen Verstärker mit variabler Verstärkung (8) umfasst.

6. Vorrichtung nach einem der Ansprüche 1 bis 4, **dadurch gekennzeichnet, dass** die Verstärkung des Verstärkers (7) des Hauptkreises (1) unverstellbar ist, wobei der Nebenkreis einen Verstärker mit variabler Verstärkung (8) umfasst.

7. Vorrichtung nach einem der vorhergehenden Ansprüche, **dadurch gekennzeichnet, dass** die Mittel zum Steuern der Verstärkung eines Verstärkers mit variabler Verstärkung Mittel umfassen, um auf ein Signal, das von dem Hauptkreis (1) abgeleitet wird, eine vereinfachte Modellierung des Modells (10) des Nebenkreises anzuwenden.

8. Vorrichtung nach einem der vorhergehenden Ansprüche, **dadurch gekennzeichnet, dass** der Nebenkreis (2) den Hauptkreis (1) am Eingang des servobetätigten Systems (4) treibt.

9. Vorrichtung nach einem der vorhergehenden Ansprüche, **dadurch gekennzeichnet, dass** der Nebenkreis (2) den Hauptkreis (1) vor den Ausgleichsmitteln (5) treibt.

10. Elektrohydraulische Flugsteuerung für Luftfahrzeuge, umfassend eine Steuervorrichtung, die einen Hauptregelkreis umfasst, der mindestens ein elektrohydraulisches Flugsteuerungsstellglied sowie Ausgleichsmittel vor demselben umfasst, **dadurch gekennzeichnet, dass** die Steuervorrichtung einem der vorhergehenden Ansprüche entspricht.

FIG.1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5369345 A